# EUROPEAN PATENT SPECIFICATION

(11) **EP 1 986 080 B1**
(45) Date of publication and mention of the grant of the patent: **16.12.2009**
(21) Application number: 07106946.2
(22) Date of filing: 25.04.2007
(51) Int. Cl.: G06F 3/023, G06F 17/27

(54) **Keystroke error correction method**
Tippfehlerkorrekturverfahren
Procédé pour la correction d'erreurs de frappe

(43) Date of publication of application: 29.10.2008
(73) Proprietor: Research In Motion Limited, Waterloo, Ontario N2L 3W8 (CA)
(72) Inventor: Idzik, Jacek S., Kenilworth Ontario N0G 2E0 (CA)
(74) Representative: Roberts, Gwilym Vaughan

(56) References cited:
- EP-A- 1 630 648
- WO-A-00/38041
- WO-A2-2005/064587
- US-A- 6 047 300
- US-A1- 2006 224 586
- "Mechanism to enhance spelling correction via inclusion of keyboard layout in determining appropriate spelling" IP.COM JOURNAL, IP.COM INC., WEST HENRIETTA, NY, US, 30 January 2007 (2007-01-30), XP013117796 ISSN: 1533-0001

## Description

### BACKGROUND

### Field

The disclosure relates generally to keyboards used in text entry, and more particularly, to a method for detecting and correcting keystroke errors associated with the mistyping of words as those words are entered.

### Background Information

Numerous types of electronic devices employing various forms of text entry keyboard are known. Also known is the long felt need to reduce the physical size and weight of many of these electronic devices. This need arises where an electronic device must be made more portable so that it may be more easily carried by its user. This need also arises where reducing the cost of the electronic device has become important, and by reducing the quantity of materials used by making an electronic device smaller, that electronic device may be made more inexpensively.

One common approach to achieving such reductions is the use of so-called "reduced" keyboards in which a number of the keyboard keys have multiple text and/or numeric characters associated with them. This gives the reduced keyboard an "ambiguous" characteristic such that when a user enters text and/or numbers a software routine (commonly referred to as a "disambiguation" routine) must be employed to attempt to derive which characters on each of those keys were the intended characters. An important drawback to the use of such ambiguous keyboards is the infrequent, but still plentiful occurrences of incorrect results from the efforts of the disambiguation routine in deriving what the user was attempting to enter in the way of text and/or numbers.

Another common approach to achieving such reductions in size and weight is to use a more traditional keyboard (such as a keyboard having the widely used "qwerty" layout) so as to enable unambiguous entry of text and numbers, but replacing mechanical keys having full-size and full-travel keys with mechanical keys where either the depth of travel is reduced to reduce the thickness of the keyboard, or the size of the keys, themselves, is reduced so that the keyboard takes up less space, overall. Another similar common approach is to again maintain unambiguous input capability, and achieving such reductions by doing away with mechanical keys, altogether, in favor keyboards using a touch-sensitive membrane, a sheet of rubber buttons, or an array of metal domes. Still another more recent approach is to combine an unambiguous keyboard with a display by making the display a touchscreen where graphics are drawn to denote the locations of virtual keys on the display at times when keyboard input is desired.

Unfortunately, many of these various efforts at reducing the size and weight of keyboards come at the cost of increasing the frequency with which words are mistyped by users of these electronic devices, even where unambiguous keyboard configurations are used. Reducing the depth of travel in a mechanical keyboard can result in a keyboard that feels unnatural to a touch-typing user by reducing the tactile feedback that touch-typing users are accustomed to, thereby becoming distracting enough to induce an increase in typing errors. Replacing a mechanical keyboard with a non-mechanical keyboard in which travel is either nearly or completely eliminated also often has the same effect. Furthermore, regardless of the type of keyboard provided, efforts to reduce the size of the keys, themselves, often make a keyboard much harder for users with larger hands and fingers to use, and thereby also increases typing errors.

Given that such approaches to reduce the size and weight of keyboards are likely to continue to be used, there is clearly a need to provide a way to counteract the accompanying increases in text entry errors.

WO-A-00/38041 discloses a keyboard system for a computing device with correction of key based input errors, wherein alternatives are suggested, after entry of a complete word, and wherein the location of the keys on the keyboard are taken into account.

Aspects of the invention are defined in the accompanying independent claims.

### BRIEF DESCRIPTION OF THE DRAWINGS

A full understanding of the disclosed and claimed concept can be gained from the following Description when read in conjunction with the accompanying drawings in which:

Fig. 1 is a top plan view of an embodiment of an electronic device in accordance with the disclosed and claimed concept;

Fig. 2 is a top plan view of another embodiment of an electronic device in accordance with the disclosed and claimed concept;

Fig. 3 is a top plan view of another embodiment of an electronic device in accordance with the disclosed and claimed concept;

Fig. 4 is a top plan view of another embodiment of an electronic device in accordance with the disclosed and claimed concept;

Fig. 5 is a schematic depiction of an electronic circuit common to the embodiments of electronic devices of Figs. 1-4;

Fig. 6a is an exemplary output during part of a text entry operation;

Fig. 6b is another exemplary output during another part of the text entry operation of Fig. 6a;

Fig. 6c is another exemplary output during another part of the text entry operation of Fig 6a; and

Fig. 6d is another exemplary output during another part of the text entry operation of Fig. 6a; and

Fig. 7 is an exemplary flowchart depicting certain aspects of a keystroke error correction method in accordance with the disclosed and claimed concept.

Similar numerals refer to similar parts throughout the specification.

### DESCRIPTION OF THE PREFERRED EMBODIMENT

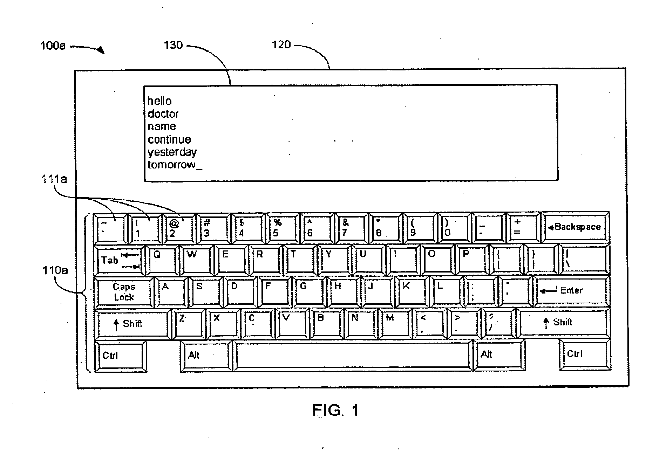

Each of Figures 1 through 4 depict alternate forms of an electronic device 100a-d, each having a different form of a keyboard 110a through 110d, respectively, disposed on a housing 120. As will be explained, the size and/or other characteristics of each of these keyboards, as well as other types of keyboards not described herein, may provide various challenges to a user's effort to enter text information, leading to an increased likelihood of mistyping text. However, as will also be explained, all of these keyboards may be employed in embodiments discussed herein in which occurrences of mistyping of text are counteracted so as to allow a user to make more effective use of such keyboards.

In Figure 1, the keyboard 110a is a mechanical keyboard in which each of the keys 111a has a keycap that is moved towards the housing 120 when actuated by a user pressing on it. The maximum distance that the keycap is able to be moved when actuated defines the maximum depth of "travel" of the keys 111a. Such keyboards are widely used in computers, portable computers, word processors, electronic typewriters, terminals, and other electronic devices where it is desirable to provide keyboard keys with enough depth of travel that users who touch-type are provided with a comfortable degree of tactile feedback.

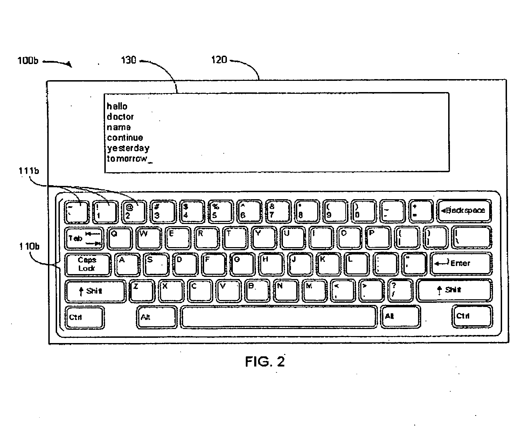

In Figure 2, the keyboard 110b is one of various possible forms of membrane, rubber button sheet, metal dome or other form of keyboard in which the keys 111b are comprised of some form of pliable material that is flexed or otherwise deformed when actuated by being pressed by a user. Such keyboards are widely used in industrial controls and food preparation settings where resistance to infiltration by particulates and/or liquid is desired, or simply to provide a lower cost alternative to mechanical keyboards.

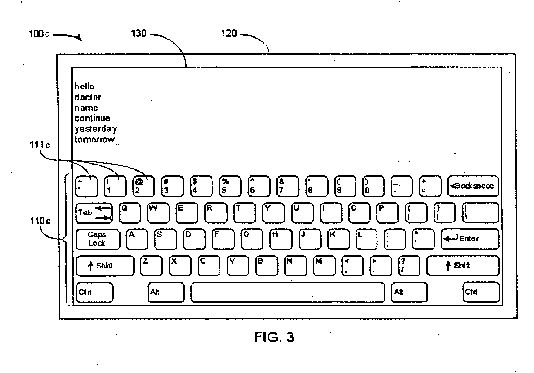

In Figure 3, the keyboard 110c is a virtual keyboard where there is no distinct mechanical component or other physical object that is moved or flexed when a key is actuated by a user. Instead, the keys 111c of the keyboard 110c are virtual keys provided by graphical images representing keys being drawn on a touchscreen variant of the display 130, and any of a variety of forms of touch sensing technology is used to detect tapping or pressing by the fingers of a user against portions of the surface of the display 130 overlying the graphical images representative of specific keys.

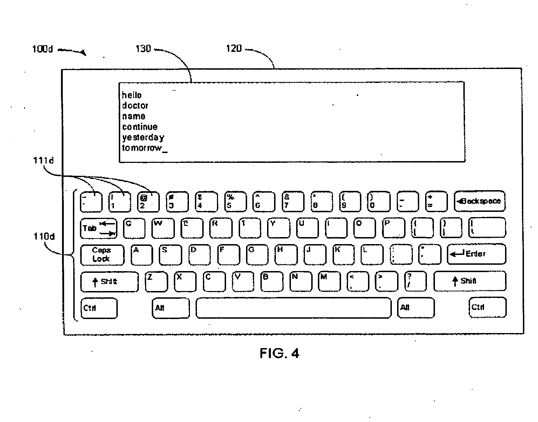

In Figure 4, the keyboard 110d is a different form of virtual keyboard where the keys 111d are also virtual keys, but are provided by graphical images representing keys being printed, embossed, engraved or otherwise marked on a portion of the housing 120. Transducers, vibration detectors and/or microphones disposed about the housing 120 may provide input to a processing device to enable a determination of what portion of the housing 120 corresponding to a specific key is tapped upon or pressed by a finger of the user as the act of actuating a key.

The electronic devices 100a-d of Figures 1-4 may each be any of a wide variety of types of electronic device including, but not limited to, a computer, an electronic word processor, an industrial process control device, an public internet kiosk, a data entry station, a label printing device, a terminal, etc. Although the electronic devices 100a-d have been described, at length, as being used with four particular examples of types of keyboard (i.e., the keyboards 110a-d), and all of Figures 1-4 depict keyboards with the same layout of keys (i.e., what is commonly referred to as the "QWERTY" layout permitting unambiguous entry of text and numbers), it will be readily apparent to those skilled in the art that other types of keyboard, other keyboard layouts and/or keyboards supporting languages other than languages that employ Latin characters may also be used. Also, although the electronic devices 100a-d are depicted in Figures 1-4 as having a display 130 disposed on the housing 120, alternate embodiments are possible in which the display 130 is disposed on a separate housing. Furthermore, the display 130 may be based on any of a wide variety of technologies including, but not limited to, a cathode ray tube, a liquid crystal display, a plurality of light emitting diodes, a plasma display, an electroluminescent display, etc.

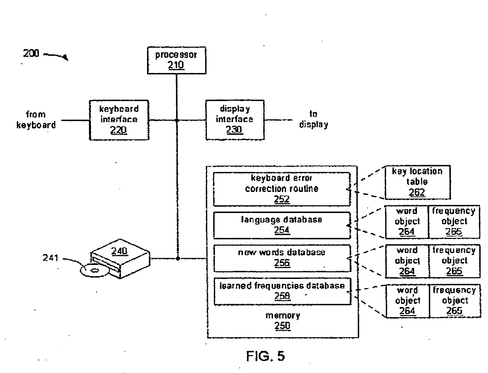

Figure 5 depicts at least a portion of an electronic circuit 200 that may be employed by any of the embodiments of the electronic devices 100a-d depicted in Figures 1-4. The electronic circuit 200 is comprised of a processor 210, a keyboard interface 220, a display interface 230 and a memory 250, and may optionally also comprise a media storage device 240. As those skilled in the art will readily understand, the processor 210, the keyboard interface 220, the display interface 230, the media storage device 240 and the memory 250 may be interconnected by any of a wide variety of possible bus architectures and interconnection topologies enabling the interchange of addresses, commands and/or data therebetween. In embodiments where one of the electronic devices 100a-d is comprised of a single housing 120 (as depicted in Figures 1-4), the electronic circuit 200 may be disposed upon the housing 120 of the electronic device 100, and in other embodiments where one of the electronic devices 100a-d is comprised of more than one housing, at least a portion of the electronic circuit 200 may be disposed upon another housing (not shown).

The processor 210 may be of any of a variety of forms of processing device including, but not limited to, a specialized processor such as a digital signal processor (DSP), a microcontroller, a general purpose microprocessor, or other form of processing device capable of executing a sequence of instructions. The keyboard interface 220 is coupled to a keyboard, such as one of the keyboards 110a-d of Figures 1-4, respectively, to receive keyboard input therefrom and to provide data representative of that input to the processor 210. The display interface 230 is coupled to a display device, such as the display 130 of Figures 1-4, to output at words and/or graphical images. In embodiments in which the keyboard to which the keyboard interface 220 is coupled is implemented as a virtual keyboard drawn on a display to which the display interface 230 is also coupled, thereby providing a touchscreen interface such as what is depicted as keyboard 110c in Figure 3, the keyboard interface 220 and the display interface 230 may be combined in various ways known to those skilled in the art so as to enhance the speed and/or functionality of the interaction between the keyboard input and display output functions. The media storage device 240 may be based on any of a variety of data storage technologies including, but not limited to, ROM, EPROM, FLASH, magnetic, optical, magnetooptical, etc., and may employ either a removable form of storage media (e.g., using removable media such as the storage media 241 depicted in Figure 5) or a nonremovable form of storage media (e.g., a hard disk). The memory 250 may be based on any of a variety of data storage technologies including, but not limited to, ROM, EPROM, FLASH, SRAM, DRAM, magnetic core, etc. Where the processor 210 is a microcontroller or processing portion of a larger integrated circuit, the processor 210 and the memory 250 may be combined in ways that will be familiar to those skilled in the art.

Stored within the memory 250 are at least a keystroke error correction routine 252 along with one or more of a language database 254, a new words database 256 and a learned frequencies database 258. As will be explained in greater detail, the processor 210 accesses the memory 250 to read and then execute a sequence of instructions within the keystroke error correction routine 252 to counteract errors made by a user entering text via a keyboard (such as one of the keyboards 110a-d). In executing such a sequence of instructions, the processor 210 is caused to compare sequences of characters received from a keyboard coupled to the keyboard interface 220 to words stored in the language database 254, the new words database 256 and/or the learned frequencies database 258. Where apparent errors in entering text are found, the processor 210 is caused by the keyboard error correction routine 252 to output one or more suggested words on a display coupled to the display interface 230 (such as the display 130) to assist the user in correcting his/her text entry errors. Stored either among the instructions of the keyboard error correction routine 252 or at another location within the memory 250 (or within another data storage device) is a keyboard location table 262 in which information concerning the relative locations of the keys on a keyboard having text characters associated therewith is maintained, such that which text key(s) are disposed adjacent to which other text key(s) may be determined by reading at least a portion of the keyboard location table 262.

The language database 254 stores a plurality of complete words from one or more languages that may be chosen by a user. Each word of the plurality of words is stored as a word object 264 form of language object that specifies the spelling of that word. Also, each word object 264 is associated with a frequency object 265 having a frequency value indicative of the relative frequency of that word, i.e., the frequency with which that word is used in comparison to other words of the chosen language(s).

The contents of the language database 254 may be derived in any of a wide variety of ways. For example, numerous texts and/or other language sources may be analyzed to determine what words are to be included in the language database 254 and their relative frequencies. Regardless of the type of analyses done to derive the contents of the language database 254, once those analyses are done, the contents of the language database 254 are maintained substantially inviolate.

However, in order to provide a user a customized experience that reflects the manner in which that user employs his/her chosen language(s), new words that are learned by the electronic circuit 200 as the user employs them are stored in the new words database 256, and adjustments to the relative frequencies with which words stored in the language database 254 are employed by the user are stored in the learned frequencies database 258. Like the words stored in the language database 254, new words are stored in the new words database 256 as a pairing of a word object 264 and an associated frequency object 265. Similarly, the learned frequencies database stores adjustments to relative frequencies of words by storing word objects 264 along with associated frequency objects 265 having the adjusted frequency values.

Entries are made into the learned frequencies database 258 as it becomes apparent over time that a user uses certain words substantially more or less frequently than the frequency values associated with those certain words might suggest. Various possible algorithms may be employed resulting in various sequences of instructions to be executed by the processor 210 to determine whether or not a user's frequency of use of a particular word object 264 differs substantially enough to warrant adding an entry into the learned frequencies database 258 of that word along with an adjusted frequency value. When an entry is made in the learned frequencies database 258, the adjusted frequency value takes precedence over whatever frequency value may be present in the languages database 254. In some embodiments, entries may also be made in the learned frequencies database 258 to adjust the frequency values for words stored in the new words database 256 in embodiments where the frequency values stored as frequency objects in the new words database 256 are not to be modified after being stored therein.

As those skilled in the art will readily recognize, there are a number of possible ways in which a database of words may be organized and stored in any electronic device, and there are limitless possibilities in selecting the extent and breadth of words that are to be included. For example, although the embodiments discussed in detail, herein, make use of a language database 254 alongside separate databases for storing new words and for storing modifications to frequencies of words in the language database 254, those skilled in the art will readily recognize that other embodiments of the electronic circuit 200 (as possibly employed in one of the electronic devices 100a-d) are possible in which the contents of these separate databases may be combined in various ways. Furthermore, although not depicted in Figure 5 and not discussed in detail, alternate embodiments may employ more than one language database, including language databases loaded into an electronic device by a user to add words such as specialized terminology from a given trade, words of yet another language, etc. Also, such additional language databases may be separately maintained within the memory 250 and/or the media storage device 240, may be incorporated into the new words database 256, or may be combined with the language database 254.

Furthermore, in embodiments that incorporate the media storage device 240, storage media 241 may contain a copy of or an update to the keyboard error correction routine 252, a copy of or an update to the language database 254, an additional language database, an initial or starter version of the new words database 256, and/or an initial or starter version of the learned frequencies database 258. Such storage media 241 may be provided by a manufacturer or supplier of the electronic device 100 as a backup copy of at least a portion of the contents of the memory 250 (including the keyboard error correction routine 252). Alternatively, such storage media 241 may be employed by a user to archive a version of at least a portion of the contents of the memory 250 (including a version of either the new words database 256 or the learned frequencies database 258 that is developed over time).

In some embodiments, including embodiments in which a language chosen by the user is English and/or another language using a similar quantity of characters to form words, the words stored in the language database 254 may be organized into data tables that correspond to the first two characters of at least some of those words such that all of the words within a given table start with the same two characters. Depending upon the quantity of words within any given data table, the data table may additionally include sub-data tables within which words are organized by first three (or more) characters. The creation of tables and/or sub-data tables may be in response to database architecture limitations such as the use of indices represented with byte-wide values such that the available index values are limited to a range such as 0 to 255.

Although each word within such a table or sub-table may be stored as an associated pairing of a word object 264 and a frequency object 265, as earlier described, valuable space within the memory 250 may be saved by storing an additional frequency object that is associated with the entire table or sub-table (and not just with a single word object 264) where the value stored therein represents the highest frequency found to be associated with any of the word objects 264 within that table, and then having each of the word objects 264 associated with a frequency object 265 store a frequency value that specifies the frequency of the associated word as a percentage of or as a difference from the one frequency object associated with the table or sub-table. For example, a frequency object associated with a table or sub-table may occupy two bytes within the memory 250 and be used to maintain a frequency value representative of the highest frequency value found to be associated with any of the word objects 264 within that table, while the frequency objects 265 associated with each of those word objects 264 occupies only a single byte and specifies how much lower the frequency value of the associated word object 264 is in comparison to the frequency value associated with the table or sub-table as either a percentage of that two-byte value or as a difference that is subtracted from that two-byte value.

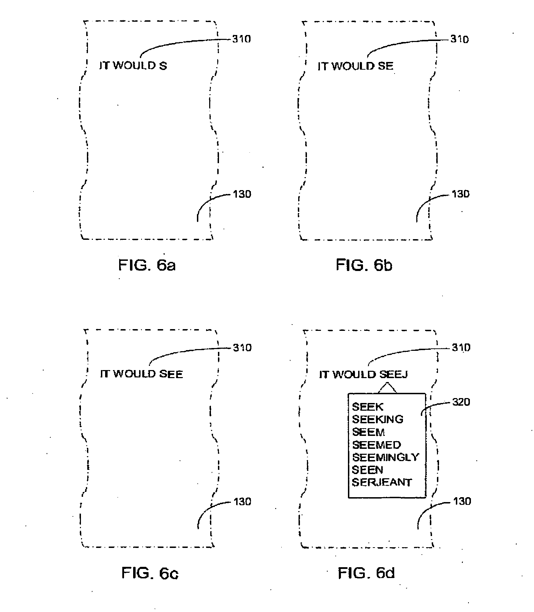

Figures 6a through 6d depict an example of visual output that a user of an embodiment of one of the electronic devices 100a-d employing an embodiment of the electronic circuit 200 may see on a portion of the display 130 as the user enters text on a corresponding one of the keyboards 110a-d. More specifically, what is depicted in Figures 6a-d is an example of the output that may be presented to a user employing the English language who errantly enters the sequence of characters "SEEJ" while attempting to enter the sequence of characters "SEEM" following the text "IT WOULD" already displayed in a text area 310 on the display 130. The processor 210 of the electronic circuit 200 receives the user's keyboard input (including text input) through the keyboard interface 220. In executing a sequence of instructions of the keyboard error correction routine 252, the processor 210 checks only the text input forms of keyboard input creating a sequence of characters for indications of a typing error. Such non-text input that would not be checked includes, but is not limited to, instances of actuating cursor keys to move a cursor about the display 130, or instances of actuating a key corresponding to a delimiter such as actuating an <ENTER> key to add a line, actuating a <TAB> key to indent, etc.

Turning to Figure 6a, with the actuation of a first text character key denoting a first text character (namely, the text character "S") of a sequence of characters, the processor 210, in executing a sequence of instructions of the keyboard error correction routine 252, is caused to access the language database 254 and the new words database 256 to determine if there are any words that start with the character "S" so as to check that the actuation of the first text character key was not in error. Given that numerous words in English do start with this character, it is likely that both the language database 254 and the new words database 256 will have numerous words starting with this character, thereby providing an indication that the actuation of the first text character key was not in error. As a result, the character "S" is simply displayed in the text area 310.

Turning to Figure 6b, with the actuation of a second text character key denoting a second text character (namely, the text character "E"), the processor 210 is caused to access the language database 254 and the new words database 256 to determine if there are any words that start with the "SE" sequence of characters so as to check that the actuation of the second text character key was not in error. It is likely that at least one, if not both, of the language database 254 and the new words database 256 will have numerous words starting with this sequence of characters, thereby providing an indication that the actuation of the second text character key was not in error. As a result, the characters "SE" are simply displayed in the text area 310.

Turning to Figure 6c, with the actuation of a third text character key denoting a third text character (namely, a second instance of the text character "E"), the processor 210 is caused to access the language database 254 and the new words database 256 to determine if there are any words that start with the "SEE" sequence of characters. Again, it is likely that at least one, if not both, of the language database 254 and the new words database 256 will have words starting with this sequence of characters, thereby providing an indication that the actuation of the third text character key was not in error. As a result, the characters "SEE" are simply displayed in the text area 310.

Turning to Figure 6d, with the actuation of a fourth text character key denoting a fourth text character (errantly, the text character "J" where the text character "M" was intended), the processor 210 is caused to access the language database 254 and the new words database 256 to determine if there are any words that start with the characters "SEEJ" sequence of characters. However, unlike the previous three times in which the processor 210 has performed this check, no words are found in either of the language database 254 or the new words database 256 that start with this sequence of characters, thereby providing an indication that the actuation of at least one of the text character keys denoting these characters was in error. In response to this indication of a typing error, the processor 210 is caused to access the keyboard location table 262 to determine what text character keys are adjacent to each of the text character keys that correspond with each character of the "SEEJ" sequence of characters. The processor 210 is then caused to substitute, one at a time, each of the characters in this sequence of characters with the text characters corresponding to those adjacent text character keys to generate alternate sequences of characters. The processor 210 is then further caused to access the language database 254 and the new words database 256 to determine if any words start with any of the alternate sequences of characters, and to cause any such words to be displayed to the user as a list of alternatives.

More specifically, the keyboard location table 262 is accessed to determine what text character keys are adjacent to the "S", "E" and "J" text character keys corresponding to the characters of the errant "SEEJ" sequence of characters. Presuming that a keyboard having a typical "QWERTY" layout is employed, the text character keys adjacent to the "S" text character keys are the "A", "D", "E", "W", "X" and "Z" text character keys; the text character keys adjacent to the "E" text character key are the "D", "R", "S" and "W" text character keys; and the text character keys adjacent to the "J" text character key are the "H", "I", "K", "M", "N" and "U" text character keys. Substituting the "S" character in "SEEJ" with characters corresponding to adjacent keys yields the "AEEJ", "DEEJ", "EEEJ", "WEEJ", "XEEJ" and "ZEEJ" alternate sequences of characters. Substituting the first "E" character in "SEEJ" with characters corresponding to adjacent keys yields the "SDEJ", "SREJ", "SSEJ" and "SWEJ" alternate sequences of characters. Substituting the second "E" character in "SEEJ" with characters corresponding to adjacent keys yields the "SEDJ", "SERJ", "SESJ" and "SEWJ" alternate sequences of characters. Finally, substituting the "J" character in "SEEJ" with characters corresponding to adjacent keys yields the "SEEH", "SEEI", "SEEK", "SEEM", "SEEN" and "SEEU" alternate sequences of characters. In accessing the language database 254 and the new words database 256 to check for any words that start with any of these alternate sequences of characters, words are found that start with the "SEEK", "SEEM", "SEEN" and "SERJ" alternate sequences of characters, including the words "SEEK", "SEEKING", "SEEM", "SEEMED", "SEEMINGLY", "SEEN" and "SERJEANT" (an obscure spelling of "sergeant").

In response to having found words corresponding to at least one of the alternate sequences of characters, and in response to the indication of a typing error that prompted the generation of the alternate character sequences, the processor 210 is further caused to output the corresponding words in a list 320. The output of the list 320 serves to notify the user of the possibility that the user has made a typing error, and to allow the user to select from among the list 320 one of the corresponding words as being the text that the user was attempting to enter. In some embodiments, the corresponding words may be presented in alphabetical order, as depicted in Figure 6d. In other embodiments, frequency objects 265 associated with each of these corresponding words are retrieved from the language database 254 and/or the new words database 256, and these words corresponding to the alternate sequences of characters are organized in descending order of frequency of use with the most frequently used one of the corresponding words being the first word in the list 320.

If the user, in response to the output of the list 320, either continues adding to the sequence of characters entered so far by actuating another text character key, or completes the entry of the sequence of characters by actuating a key denoting a delimiter (e.g., a <SPACE BAR> key or an <ENTER> key), then the user's actions will be taken as an indication from the user that the user did not make a typing error and that the sequence of characters is text that the user intended to enter. In some embodiments, this indication from the user further results in the processor 210 storing the sequence of characters entered by the user as a new word in the new words database 256. Furthermore, in such embodiments, the new word is stored as a new word object 264 in the new words database 256 along with a frequency object 266 created and associated with the new word object 264. Such a frequency object 266 may be given a value indicating a relatively high frequency of use as compared to other words on the assumption that since the user has actually used the new word, it is more likely that the user will do so, again.

However, if the user, in response to the output of the list 320, selects one of the words within the list 320, then the user's actions will be taken as an indication from the user that a typing error was made. No new word object 264 will be stored in the new words database 256. Also, if the user, in response to the output of the list 320, attempts to correct the sequence of characters (e.g., by actuating a <BACKSPACE> key, a cursor key, or a <DELETE> key), then the user's actions will be taken as an indication from the user that a typing error was made. Also, as the user removes, replaces or otherwise inserts characters in the sequence of characters, each such change in the sequence of characters will prompt the processor 210 to again access the language database 254 and the new words database 256 to check if there are any words that start with the sequence of characters as modified by each such change.

Alternatively, if after creating alternate sequences of characters in response to the errant entry of the "SEEJ" sequence of characters, no words are found in either the language database 254 or the new words database 256 that begin with any of the alternate sequences of characters, then no list 320 is output to the user. Instead, in some embodiments, the characters "SEEJ" are displayed, but the displaying of these characters is accompanied by an indication output to the user that this sequence of characters includes a typing error. This indication may be visual in nature, such as and not limited to, displaying the characters "SEEJ" in a different color from other text in the text area 310, with a different font, by causing the characters to flash, or accompanied by a pointer or other visual marker. Alternatively, the indication may be audible or tactile, such as and not limited to, the generation of a tone or vibration of the housing 120.

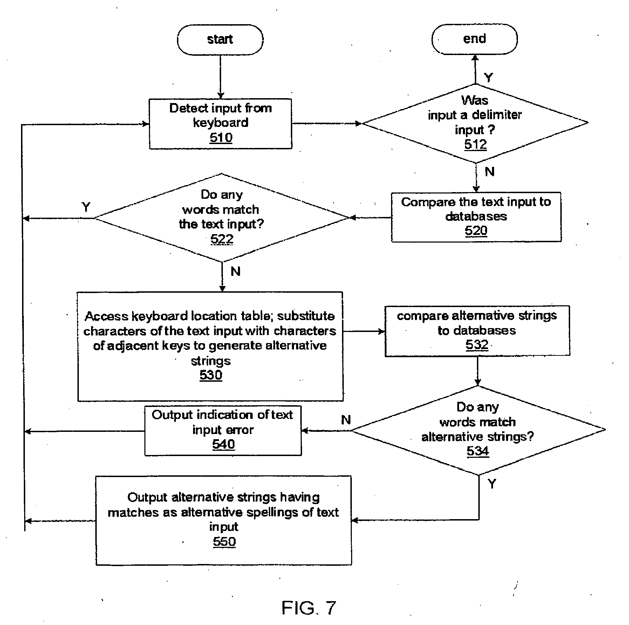

An exemplary flowchart depicting certain aspects of a keystroke error correction method in accordance with the disclosed and claimed concept is indicated generally in Fig. 7. With each input from the keyboard, as at 510, the system determines, as at 512, whether the input was a delimiter input such as a <SPACE BAR> key or an <ENTER> key actuation. If it is determined at 512 that the input was a delimiter input, the keystroke error correction method terminates as to that particular word, and processing can thereafter continue, as at 510, with the inputting of another word. However, if it is determined at 512 that the input was not a delimiter input, i.e., the input was an actuation of a key to which a character is assigned, the system compares, as at 520, the text input with the contents of the various linguistic data sources in the memory 250, such as the language database 254, the new words database 256, and the like. It is then determined, as at 522, whether any words in such linguistic sources match the text input.

If at least one matching one word is found at 522, processing continues, as at 510, where additional inputs can be detected from the keyboard. However, if it is determined at 522 that no words matched the text input, processing continues, as at 530, where the system accesses the keyboard location table 262 to locate the various text character keys that are adjacent to the actuated text character keys of the text input. Also, the system employs, as at 530, the adjacent, i.e., alternate, text character keys to generate alternative strings. As mentioned elsewhere herein, an alternative string is generated by replacing a single character in the text input with a character from a key adjacent to key which generated the replaced character.

Processing thereafter continues, as at 532, where the system compares the alternative string to the various linguistic data sources, i.e., the language database 254, the new words database 256, and the like. If it is determined, as at 534, that no words match the alternative strings, processing continues, as at 540, where an indication of an input error is output on the display. Processing can thereafter continue, as at 510, where additional inputs can be detected from the keyboard. However, if it is determined at 534 that one or more words in the memory 250 match one or more of the alternative strings, processing continues, as at 550, where the alternative strings having matches are output as alternative spellings of the text input. Processing can thereafter continue, as at 510, where additional input can be detected from the keyboard.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended.

## Claims

1. A method of enabling input into an electronic device comprising:
receiving as a sequence of characters a series of actuations of actuated text character keys of a keyboard;
in response to each said actuation of an actuated text character key, accessing at least one database to attempt to locate at least one word beginning with the sequence of characters;
responding to no word beginning with the sequence of characters being found in the at least one database by accessing a table of text character key locations to locate one alternate text character key adj acent to one of the actuated text character keys;
generating an alternate sequence of characters by substituting in the sequence of characters the character that corresponds to the one of the actuated text character keys with the character that corresponds to the one alternate text character key; and
accessing the at least one database to attempt to locate at least one word beginning with the alternate sequence of characters.

2. The method of Claim 1 further comprising:
outputting the sequence of characters; and
responding to no word beginning with the alternate sequence of characters being found in the at least one database by outputting an indication that the sequence of characters may include a typing error.

3. The method of Claim 2 further comprising responding to an actuation of a non-text key by which a user of the electronic device changes the sequence of characters, thereby providing an altered sequence of characters, by accessing the at least one database to attempt to locate at least one word beginning with the altered sequence of characters.

4. The method of Claim 1 further comprising:
outputting the sequence of characters; and
responding to a word beginning with the alternate sequence of characters being found in the at least one database by outputting the word in a list.

5. The method of Claim 4 further comprising responding to an actuation of a non-text key by which a user of the electronic device selects the word in the list by replacing the output of the sequence of characters with the word in the list.

6. The method of Claim 4 wherein the word in the list comprises a plurality of words, and wherein outputting the word in the list comprises outputting the words of the plurality of words in a descending order of their relative frequency of use in a chosen language.

7. The method of Claim 1 further comprising:
outputting the sequence of characters; and
outputting an indication that the sequence of characters may include a typing error.

8. The method of Claim 7 further comprising responding to an actuation of a key by which a user of the electronic device indicates that the sequence of characters does not include a typing error by adding the sequence of characters to the at least one database.

9. The method of Claim 1 further comprising:
responding to no word beginning with the sequence of characters being found in the at least one database by accessing the table of text character key locations to locate another alternate text character key adjacent to another of the actuated text character keys;
generating another alternate sequence of characters by substituting in the sequence of characters the character that corresponds to the another of the actuated text character keys with the character that corresponds to the another alternate text character key; and
accessing the at least one database to attempt to locate at least one word beginning with the another alternate sequence of characters.

10. An electronic device comprising:
a casing;
a keyboard;
a processor;
a memory having stored therein at least one database, a table of text character key locations, and a keyboard error correction routine including at least one sequence of instructions that when executed by the processor causes the processor to:
receive as a sequence of characters a series of actuations of actuated text character keys of the keyboard;
in response to each said actuation of an actuated text character key, access the at least one database to attempt to locate at least one word beginning with the sequence of characters;
respond to no word beginning with the sequence of characters being found in the at least one database by accessing a table of text character key locations to locate one alternate text character key adjacent to one of the actuated text character keys;
generate an alternate sequence of characters by substituting in the sequence of characters the character that corresponds to the one of the actuated text character keys with the character that corresponds to the one alternate text character key; and
access the at least one database to attempt to locate at least one word beginning with the alternate sequence of characters.

11. The electronic device of Claim 10 wherein the processor is further caused to:
output the sequence of characters; and
respond to no word beginning with the alternate sequence of characters being found in the at least one database by outputting an indication that the sequence of characters may include a typing error.

12. The electronic device of Claim 11 wherein the processor is further caused to respond to an actuation of a non-text key by which a user of the electronic device changes the sequence of characters, thereby providing an altered sequence of characters, by accessing the at least one database to attempt to locate at least one word beginning with the altered sequence of characters.

13. The electronic device of Claim 10 wherein the processor is further caused to:
output the sequence of characters; and
respond to a word beginning with the alternate sequence of characters being found in the at least one database by outputting the word in a list.

14. The electronic device of Claim 13 wherein the processor is further caused to respond to an actuation of a non-text key by which a user of the electronic device selects the word in the list, by replacing the output of the sequence of characters with the word in the list.

15. The electronic device of Claim 13 wherein the word in the list comprises a plurality of words, and wherein the processor is further caused to output the words of the plurality of words in the list in a descending order of their relative frequency of use in a chosen language.

16. The electronic device of Claim 10 wherein the processor is further caused to:
output the sequence of characters; and
output an indication that the sequence of characters may include a typing error.

17. The electronic device of Claim 16 wherein the processor is further caused to respond to an actuation of a key by which a user of the electronic device indicates that the sequence of characters does not include a typing error by adding the sequence of characters to the at least one database.

18. The electronic device of Claim 10 wherein the processor is further caused to:
respond to no word beginning with the sequence of characters being found in the at least one database by accessing the table of text character key locations to locate another alternate text character key adjacent to another of the actuated text character keys;
generate another alternate sequence of characters by substituting in the sequence of characters the character that corresponds to the another of the actuated text character keys with the character that corresponds to the another alternate text character key; and
access the at least one database to attempt to locate at least one word beginning with the another alternate sequence of characters.

19. The electronic device of Claim 10 wherein the keyboard comprises images of keys printed on the casing.

20. The electronic device of Claim 10 wherein the keyboard comprises a touchscreen display.

## Patentansprüche

1. Verfahren zur Ermöglichung einer Eingabe in eine elektronische Vorrichtung, das aufweist:
Empfangen einer Serie von Betätigungen von betätigten Textzeichentasten einer Tastatur als eine Sequenz von Buchstaben bzw. Zeichen;
als Reaktion auf jede Betätigung einer betätigten Textzeichentaste, Zugreifen auf zumindest eine Datenbank, um zu versuchen, zumindest ein Wort zu lokalisieren, das mit der Sequenz von Zeichen beginnt;
als Reaktion, dass kein Wort, das mit der Sequenz von Zeichen beginnt, in der zumindest einen Datenbank gefunden wird, Zugreifen auf eine Tabelle von Textzeichentastenpositionen, um eine alternative Textzeichentaste angrenzend an eine der betätigten Textzeichentasten zu lokalisieren; Erzeugen einer alternativen Sequenz von Zeichen durch Ersetzen, in der Sequenz von Zeichen, des Zeichens, das der einen der betätigten Textzeichentaste entspricht, mit dem Zeichen, das der einen alternativen Textzeichentaste entspricht; und
Zugreifen auf die zumindest eine Datenbank, um zu versuchen, zumindest ein Wort zu lokalisieren, das mit der alternativen Sequenz von Zeichen beginnt.

2. Verfahren gemäß Anspruch 1, das weiter aufweist:
Ausgeben der Sequenz von Zeichen; und
als Reaktion darauf, dass kein Wort, das mit der der alternativen Sequenz von Zeichen beginnt, in der zumindest einen Datenbank gefunden wird, Ausgeben einer Anzeige, dass die Sequenz von Zeichen einen Schreibfehler enthalten könnte.

3. Verfahren gemäß Anspruch 2, das weiter aufweist als Reaktion auf eine Betätigung einer Nichttexttaste, durch die ein Benutzer der elektronischen Vorrichtung die Sequenz von Zeichen ändert, wodurch eine geänderte Sequenz von Zeichen geliefert wird, Zugreifen auf die zumindest eine Datenbank, um zu versuchen, zumindest ein Wort zu lokalisieren, das mit der geänderten Sequenz von Zeichen beginnt.

4. Verfahren gemäß Anspruch 1, das weiter aufweist:
Ausgeben der Sequenz von Zeichen; und
als Reaktion darauf, dass ein Wort beginnend mit der alternativen Sequenz von Zeichen in der zumindest einen Datenbank gefunden wird, Ausgeben des Wortes in einer Liste.

5. Verfahren gemäß Anspruch 4, das weiter aufweist als Reaktion auf eine Betätigung einer Nichttexttaste, durch die ein Benutzer der elektronischen Vorrichtung das Wort in der Liste auswählt, Ersetzen der Ausgabe der Sequenz von Zeichen durch das Wort in der Liste.

6. Verfahren gemäß Anspruch 4, wobei das Wort in der Liste eine Vielzahl von Wörtern aufweist und wobei ein Ausgeben des Wortes in der Liste aufweist ein Ausgeben der Wörter der Vielzahl von Wörtern in einer abnehmenden Reihenfolge ihrer relativen Verwendungshäufigkeit in einer gewählten Sprache.

7. Verfahren gemäß Anspruch 1, das weiter aufweist:
Ausgeben der Sequenz von Zeichen; und
Ausgeben einer Anzeige, dass die Sequenz von Zeichen einen Schreibfehler enthalten könnte.

8. Verfahren gemäß Anspruch 7, das weiter aufweist als Reaktion auf eine Betätigung einer Taste, durch die ein Benutzer der elektronischen Vorrichtung anzeigt, dass die Sequenz von Zeichen keinen Schreibfehler enthält, Hinzufügen der Sequenz von Zeichen zu der zumindest einen Datenbank.

9. Verfahren gemäß Anspruch 1, das weiter aufweist:
als Reaktion darauf, dass kein Wort, das mit der Sequenz von Zeichen beginnt, in der zumindest einen Datenbank gefunden wird, Zugreifen auf die Tabelle von Textzeichentastenpositionen, um eine andere alternative Textzeichentaste angrenzend an eine andere der betätigten Textzeichentasten zu lokalisieren;
Erzeugen einer anderen alternativen Sequenz von Zeichen durch Ersetzen, in der Sequenz von Zeichen, des Zeichens, das der anderen der betätigten Textzeichentasten entspricht, durch das Zeichen, das der anderen alternativen Textzeichentaste entspricht; und
Zugreifen auf die zumindest eine Datenbank, um zu versuchen, zumindest ein Wort zu lokalisieren, das mit der anderen alternativen Sequenz von Zeichen beginnt.

10. Elektronische Vorrichtung, die aufweist:
ein Gehäuse;
eine Tastatur;
einen Prozessor;
einen Speicher, der gespeichert hat zumindest eine Datenbank, eine Tabelle von Textzeichentastenpositionen und eine Tastaturfehlerkorrekturroutine, die zumindest eine Sequenz von Anweisungen umfasst, die bei Ausführung durch den Prozessor den Prozessor veranlasst:
eine Serie von Betätigungen von betätigten Textzeichentasten der Tastatur als eine Sequenz von Zeichen zu empfangen;
als Reaktion auf jede Betätigung einer betätigten Textzeichentaste, auf die zumindest eine Datenbank zuzugreifen, um zu versuchen, zumindest ein Wort zu lokalisieren, das mit der Sequenz von Zeichen beginnt;
als Reaktion, dass kein Wort, das mit der Sequenz von Zeichen beginnt, in der zumindest einen Datenbank gefunden wird, auf eine Tabelle von Textzeichentastenpositionen zuzugreifen, um eine alternative Textzeichentaste angrenzend an eine der betätigten Textzeichentasten zu lokalisieren;
eine alternative Sequenz von Zeichen zu erzeugen durch Ersetzen, in der Sequenz von Zeichen, des Zeichens, das der einen der betätigten Textzeichentaste entspricht, mit dem Zeichen, das der einen alternativen Textzeichentaste entspricht; und
auf die zumindest eine Datenbank zuzugreifen, um zu versuchen, zumindest ein Wort zu lokalisieren, das mit der alternativen Sequenz von Zeichen beginnt.

11. Elektronische Vorrichtung gemäß Anspruch 10, wobei der Prozessor weiter veranlasst wird:
die Sequenz von Zeichen auszugeben; und
als Reaktion darauf, dass kein Wort, das mit der der alternativen Sequenz von Zeichen beginnt, in der zumindest einen Datenbank gefunden wird, eine Anzeige auszugeben, dass die Sequenz von Zeichen einen Schreibfehler enthalten könnte.

12. Elektronische Vorrichtung gemäß Anspruch 11, wobei der Prozessor weiter veranlasst wird, als Reaktion auf eine Betätigung einer Nichttexttaste, durch die ein Benutzer der elektronischen Vorrichtung die Sequenz von Zeichen ändert, wodurch eine geänderte Sequenz von Zeichen geliefert wird, auf die zumindest eine Datenbank zuzugreifen, um zu versuchen, zumindest ein Wort zu lokalisieren, das mit der geänderten Sequenz von Zeichen beginnt.

13. Elektronische Vorrichtung gemäß Anspruch 10, wobei der Prozessor weiter veranlasst wird:
die Sequenz von Zeichen auszugeben; und
als Reaktion darauf, dass ein Wort beginnend mit der alternativen Sequenz von Zeichen in der zumindest einen Datenbank gefunden wird, das Wort in einer Liste auszugeben.

14. Elektronische Vorrichtung gemäß Anspruch 13, wobei der Prozessor weiter veranlasst wird, als Reaktion auf eine Betätigung einer Nichttexttaste, durch die ein Benutzer der elektronischen Vorrichtung das Wort in der Liste auswählt, die Ausgabe der Sequenz von Zeichen durch das Wort in der Liste zu ersetzen.

15. Elektronische Vorrichtung gemäß Anspruch 13, wobei das Wort in der Liste eine Vielzahl von Wörtern aufweist und wobei der Prozessor weiter veranlasst wird, die Wörter der Vielzahl von Wörtern in der Liste in einer abnehmenden Reihenfolge ihrer relativen Verwendungshäufigkeit in einer gewählten Sprache auszugeben.

16. Elektronische Vorrichtung gemäß Anspruch 10, wobei der Prozessor weiter veranlasst wird:
die Sequenz von Zeichen auszugeben; und
eine Anzeige auszugeben, dass die Sequenz von Zeichen einen Schreibfehler enthalten könnte.

17. Elektronische Vorrichtung gemäß Anspruch 16, wobei der Prozessor weiter veranlasst wird, als Reaktion auf eine Betätigung einer Taste, durch die ein Benutzer der elektronischen Vorrichtung anzeigt, dass die Sequenz von Zeichen keinen Schreibfehler enthält, die Sequenz von Zeichen zu der zumindest einen Datenbank hinzuzufügen.

18. Elektronische Vorrichtung gemäß Anspruch 10, wobei der Prozessor weiter veranlasst wird:
als Reaktion darauf, dass kein Wort, das mit der Sequenz von Zeichen beginnt, in der zumindest einen Datenbank gefunden wird, auf die Tabelle von Textzeichentastenpositionen zuzugreifen, um eine andere alternative Textzeichentaste angrenzend an eine andere der betätigten Textzeichentasten zu lokalisieren;
eine andere alternative Sequenz von Zeichen zu erzeugen durch Ersetzen, in der Sequenz von Zeichen, des Zeichens, das der anderen der betätigten Textzeichentasten entspricht, durch das Zeichen, das der anderen alternativen Textzeichentaste entspricht; und
auf die zumindest eine Datenbank zuzugreifen, um zu versuchen, zumindest ein Wort zu lokalisieren, das mit der anderen alternativen Sequenz von Zeichen beginnt.

19. Elektronische Vorrichtung gemäß Anspruch 10, wobei die Tastatur Bilder von Tasten aufweist, die auf das Gehäuse gedruckt sind.

20. Elektronische Vorrichtung gemäß Anspruch 10, wobei die Tastatur eine Touchscreen-Anzeige aufweist.

## Revendications

1. Procédé de validation d'entrée dans un dispositif électronique comprenant :
la réception, sous forme d'une séquence de caractères, d'une série de manoeuvres de touches manoeuvrées de caractère de texte d'un clavier ;
en réponse à chaque dite manoeuvre d'une touche manoeuvrée de caractère de texte, l'accès à au moins une base de données pour tenter de localiser au moins un mot commençant par la séquence de caractères ;
en réponse au fait qu'aucun mot commençant par la séquence de caractères n'a été trouvé dans l'au moins une base de données, l'accès à une table de localisations de touche de caractère de texte pour localiser une touche remplaçante de caractère de texte adjacente à l'une des touches manoeuvrées de caractères de texte ;
la génération d'une séquence remplaçante de caractères en substituant dans la séquence de caractères au caractère qui correspond à la touche manoeuvrée de caractère de texte le caractère qui correspond à la touche remplaçante de caractère de texte ; et
l'accès à l'au moins une base de données pour tenter de localiser au moins un mot commençant par la séquence remplaçante de caractères.

2. Procédé selon la revendication 1, comprenant en outre :
la sortie de la séquence de caractères ; et
en réponse au fait qu'aucun mot commençant par la séquence remplaçante de caractères n'a été trouvé dans l'au moins une base de données, la sortie d'une indication que la séquence de caractère peut inclure une faute de frappe.

3. Procédé selon la revendication 2, comprenant en outre, en réponse à une manoeuvre d'une touche de non-texte à l'aide de laquelle un utilisateur du dispositif électronique change la séquence de caractères, en fournissant ainsi une séquence de caractères modifiée, l'accès à l'au moins une base de données pour tenter de localiser au moins un mot commençant par la séquence de caractères modifiée.

4. Procédé selon la revendication 1, comprenant en outre :
la sortie de la séquence de caractères ; et
en réponse au fait qu'un mot commençant par la séquence remplaçante de caractères a été trouvé dans l'au moins une base de données, la sortie du mot dans une liste.

5. Procédé selon la revendication 4, comprenant en outre, en réponse à une manoeuvre d'une touche de non-texte à l'aide de laquelle un utilisateur du dispositif électronique sélectionne le mot dans la liste, le remplacement de la sortie de la séquence de caractères par le mot de la liste.

6. Procédé selon la revendication 4, dans lequel le mot de la liste comprend une pluralité de mots et dans lequel la sortie du mot de la liste comprend la sortie des mots de la pluralité de mots dans l'ordre décroissant de leur fréquence relative d'utilisation dans une langue choisie.

7. Procédé selon la revendication 1, comprenant en outre :
la sortie de la séquence de caractères ; et
la sortie d'une indication que la séquence de caractères peut inclure une faute de frappe.

8. Procédé selon la revendication 7, comprenant en outre, en réponse à une manoeuvre d'une touche par laquelle un utilisateur du dispositif électronique indique que la séquence de caractères n'inclut pas de faute de frappe, l'ajout de la séquence de caractères à l'au moins une base de données.

9. Procédé selon la revendication 1, comprenant en outre :
en réponse au fait qu'aucun mot commençant par la séquence de caractères n'a été trouvé dans l'au moins une base de données, l'accès à la table des localisations de touche de caractère de texte pour localiser une autre touche remplaçante de caractère de texte adjacente à une autre des touches manoeuvrées de caractère de texte ;
la génération d'une autre séquence remplaçante de caractères en substituant, dans la séquence de caractères, au caractère qui correspond à l'autre des touches manoeuvrées de caractère de texte le caractère qui correspond à l'autre touche remplaçante de caractère de texte ; et
l'accès à l'au moins une base de données pour tenter de localiser au moins un mot commençant par l'autre séquence remplaçante de caractères.

10. Dispositif électronique comprenant :
un boîtier ;
un clavier ;
un processeur ;
une mémoire, dans laquelle sont mémorisés au moins une base de données, une table de localisations de touche de caractère de texte, et un sous-programme de correction de faute de frappe incluant au moins une séquence d'instructions qui, lorsqu'elle est exécutée par le processeur, amène le processeur à :
recevoir, sous forme d'une séquence de caractères, une série de manoeuvres de touches manoeuvrées de caractère de texte du clavier ;
en réponse à chaque dite manoeuvre d'une touche manoeuvrée de caractère de texte, accéder à l'au moins une base de données pour tenter de localiser au moins un mot commençant par la séquence de caractères ;
répondre au fait qu'aucun mot commençant par la séquence de caractères n'a été trouvé dans l'au moins une base de données par l'accès à une table de localisations de touche de caractère de texte pour localiser une touche remplaçante de caractère de texte adjacente à l'une des touches manoeuvrées de caractère de texte ;
générer une séquence remplaçante de caractères par la substitution, dans la séquence de caractères, au caractère qui correspond à l'une des touches manoeuvrées de caractère de texte le caractère qui correspond à la touche remplaçante de caractère de texte ; et
accéder à l'au moins une base de données pour tenter de localiser au moins un mot commençant par la séquence remplaçante de caractères.

11. Dispositif électronique selon la revendication 10, dans lequel le processeur est en outre amené à :
sortir la séquence de caractères ; et
répondre au fait qu'aucun mot commençant par la séquence remplaçante de caractères n'a été trouvé dans l'au moins une base de données par la sortie d'une indication que la séquence de caractères peut inclure une faute de frappe.

12. Dispositif électronique selon la revendication 11, dans lequel le processeur est en outre amené à répondre à une manoeuvre d'une touche de non-texte à l'aide de laquelle un utilisateur du dispositif électronique change la séquence de caractères, en fournissant ainsi une séquence de caractères modifiée, par l'accès à l'au moins une base de données pour tenter de localiser au moins un mot commençant par la séquence de caractères modifiée.

13. Dispositif électronique selon la revendication 10, dans lequel le processeur est en outre amené à :
sortir la séquence de caractères ; et
répondre au fait qu'un mot commençant par la séquence remplaçante de caractères a été trouvé dans l'au moins une base de données par la sortie du mot dans une liste.

14. Dispositif électronique selon la revendication 13, dans lequel le processeur est en outre amené à répondre à la manoeuvre d'une touche de non-texte, à l'aide de laquelle un utilisateur du dispositif électronique sélectionne le mot dans la liste, par le remplacement de la sortie de la séquence de caractères par le mot de la liste.

15. Dispositif électronique selon la revendication 13, dans lequel le mot de la liste comprend une pluralité de mots, et dans lequel le processeur est en outre amené à sortir les mots de la pluralité de mots de la liste en ordre décroissant de leur fréquence relative d'utilisation dans une langue choisie.

16. Dispositif électronique selon la revendication 10, dans lequel le processeur est en outre amené à :
sortir la séquence de caractères ; et
sortir une indication que la séquence de caractères peut inclure une faute de frappe.

17. Dispositif électronique selon la revendication 16, dans lequel le processeur est en outre amené à répondre à une manoeuvre d'une touche, par laquelle un utilisateur du dispositif électronique indique que la séquence de caractères n'inclut pas de faute de frappe, par l'ajout de la séquence de caractères à l'au moins une base de données.

18. Dispositif électronique selon la revendication 10, dans lequel le processeur est en outre amené à :
répondre au fait qu'aucun mot commençant par la séquence de caractères n'a été trouvé dans l'au moins une base de données par l'accès à la table des localisations de touche de caractère de texte pour localiser une autre touche remplaçante de caractère de texte adjacente à une autre des touches manoeuvrées de caractère de texte ;
générer une autre séquence remplaçante de caractères par substitution, dans la séquence de caractères, au caractère qui correspond à l'autre des touches manoeuvrées de caractère de texte le caractère qui correspond à l'autre touche remplaçante de caractère de texte ; et
accéder à l'au moins une base de données pour tenter de localiser au moins un mot commençant par l'autre séquence remplaçante de caractères.

19. Dispositif électronique selon la revendication 10, dans lequel le clavier comprend des images de touches imprimées sur le boîtier.

20. Dispositif électronique selon la revendication 10, dans lequel le clavier comprend un écran tactile.
